# EUROPEAN PATENT APPLICATION

(11) **EP 3 617 829 A1**
(43) Date of publication of application: **04.03.2020**
(21) Application number: 19180615.7
(22) Date of filing: 17.06.2019
(51) Int. Cl.: G05D 1/02

(54) **ROADWAY TRANSPORT SYSTEM**

(30) Priority: 26.06.2018 US 201862689967 P; 27.06.2018 US 201816019682
(71) Applicant: Aptiv Technologies Limited, St. Michael (BB)
(72) Inventor: Liburdi, Steven A., Grosse Pointe Farms, MI 48236 (US)
(74) Representative: Manitz Finsterwald Patent- und Rechtsanwaltspartnerschaft mbB

(57) **Abstract**

A roadway transport system (10) includes a carrier-vehicle (16) and one or more controller-circuits (26). The carrier-vehicle (16) receives one or more passenger-vehicles (12) configured to autonomously dock with the carrier-vehicle (16) for traveling on a roadway (14). The communication-device (24) is operable to communicate with the one or more passenger-vehicles (12). The one or more controller-circuits (26) are in communication with the communication-device (24). The one or more controller-circuits (26) operate the communication-device (24) to coordinate docking of the one or more passenger-vehicles (12) with the carrier-vehicle (16).

## Description

### CROSS-REFERENCE TO RELATED APPLICATION

This application claims the benefit of U.S. Patent Application No. 16/019,682, filed June 27, 2018, the entire disclosure of which is hereby incorporated herein by reference. This application also claims the benefit of U.S. Provisional Patent Application No. 62/689,967 filed June 26, 2018, the entire disclosure of which is hereby incorporated herein by reference.

### TECHNICAL FIELD OF THE DISCLOSURE

This disclosure generally relates to a roadway transport system, and more particularly relates to a roadway transport system that transports passenger-vehicles.

### BACKGROUND OF THE DISCLOSURE

Autonomous ride-sharing-vehicles and/or autonomous mobility-vehicles may be required to travel over distances that may be greater than their designed operating range. Additionally, these vehicles may not be designed with the safety features of a typical passenger vehicle.

### SUMMARY OF THE DISCLOSURE

The present invention proposes to solve the above mentioned problem by providing a roadway transport system comprising a carrier-vehicle, the carrier-vehicle receiving one or more passenger-vehicles configured to autonomously dock with the carrier-vehicle for traveling on a roadway; a communication-device operable to communicate with the one or more passenger-vehicles; and one or more controller-circuits in communication with the communication-device; the one or more controller-circuits operating the communication-device to coordinate docking of the one or more passenger-vehicles with the carrier-vehicle.

According to other advantageous features of the present invention:
- the one or more controller-circuits determine a docking-location based on a location of the carrier-vehicle;
- the carrier-vehicle is autonomously controlled;
- the one or more passenger-vehicles are autonomously controlled;
- the one or more controller-circuits further operate the communication-device to coordinate undocking-locations of the one or more passenger-vehicles from the carrier-vehicle;
- the one or more passenger-vehicles undocks at-will;
- the one or more passenger-vehicles may be characterized as an automated mobility on-demand vehicle;
- the carrier-vehicle includes a fuel-port operable to re-fuel the one or more passenger-vehicles while the one or more passenger-vehicles are docked with the carrier-vehicle;
- the carrier-vehicle receives and transports the one or more passenger-vehicles to one or more undocking-locations along a travel-route;
- the carrier-vehicle includes a barrier configured to protect the one or more passenger-vehicles from collisions with other-vehicles while traveling on the roadway.

The present invention also proposes a method of operating a roadway transport system, the method comprising:
a) providing a carrier-vehicle for traveling on a roadway, the carrier-vehicle operable to receive one or more passenger-vehicles configured to autonomously dock with the carrier-vehicle;
b) operating a communication-device, with one or more controller-circuits in communication with the communication-device, to communicate with the one or more passenger-vehicles; and
c) coordinating, with the one or more controller-circuits, docking of the one or more passenger-vehicles with the carrier-vehicle.

Preferably the method further comprises the step of:
d) determining, with the one or more controller-circuits, docking-locations based on a location of the carrier-vehicle.
e) coordinating, with the one or more controller-circuits, undocking-locations of the one or more passenger-vehicles from the carrier-vehicle.
f) undocking, with the one or more passenger-vehicles, at-will.
g) transporting, with the carrier-vehicle, the one or more passenger-vehicles to one or more undocking-locations along a travel-route.
h) refueling the one or more passenger-vehicles while the one or more passenger-vehicles are docked with the carrier-vehicle, wherein the carrier-vehicle includes a fuel-port operable to re-fuel the one or more passenger-vehicles.

### BRIEF DESCRIPTION OF DRAWINGS

The present invention will now be described, by way of example with reference to the accompanying drawings, in which:
Fig. 1 is an illustration of a roadway transport system in accordance with one embodiment;
Fig. 2 is an illustration of the roadway transport system of Fig. 1 in accordance with one embodiment;
Fig. 3 an illustration of the roadway transport system of Fig. 1 in accordance with one embodiment; and
Fig. 4 is an illustration of a method of operating the roadway transport system of Fig. 1 in accordance with another embodiment.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

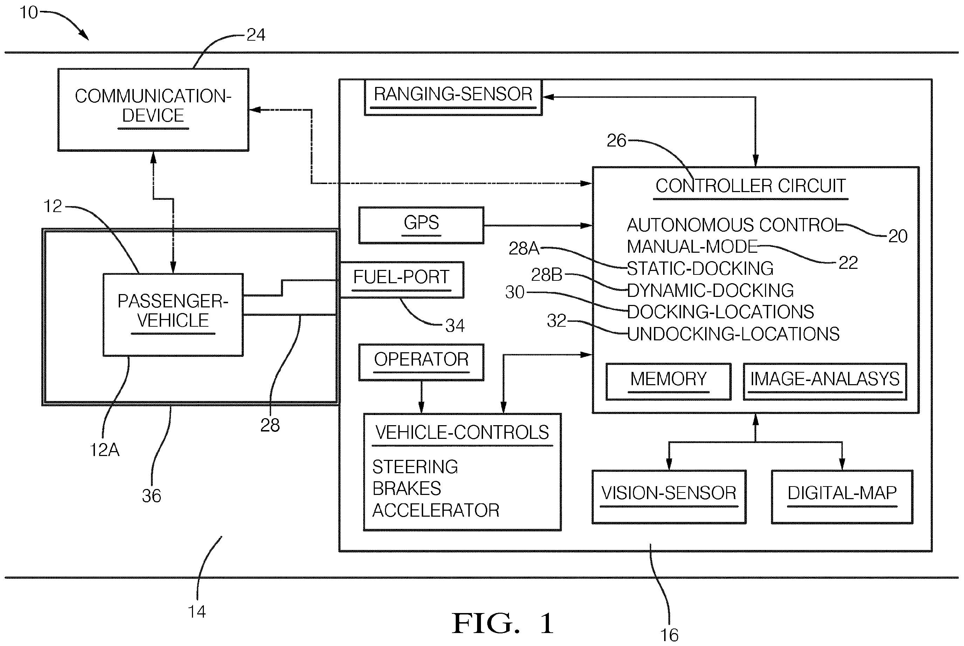

Fig. 1 illustrates a roadway transport system 10, hereafter referred to as the system 10, for use in transporting one or more passenger-vehicles 12 on a roadway 14. As will be described in more detail below, the system 10 is an improvement on previous roadway-transport-systems because the system 10 transports the one or more passenger-vehicles 12 over distances that may be greater than a range-of-operation of the one or more passenger-vehicles 12. In addition, the system 10 may reduce the demands of data management for autonomous ride-sharing-vehicles and/or autonomous mobility-vehicles traveling on the roadway 14.

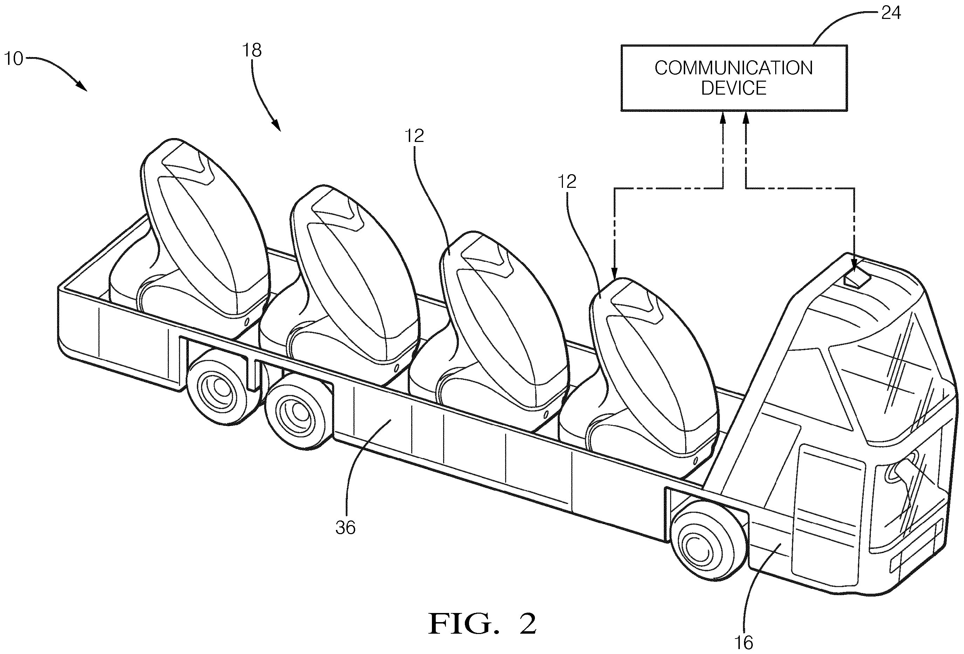

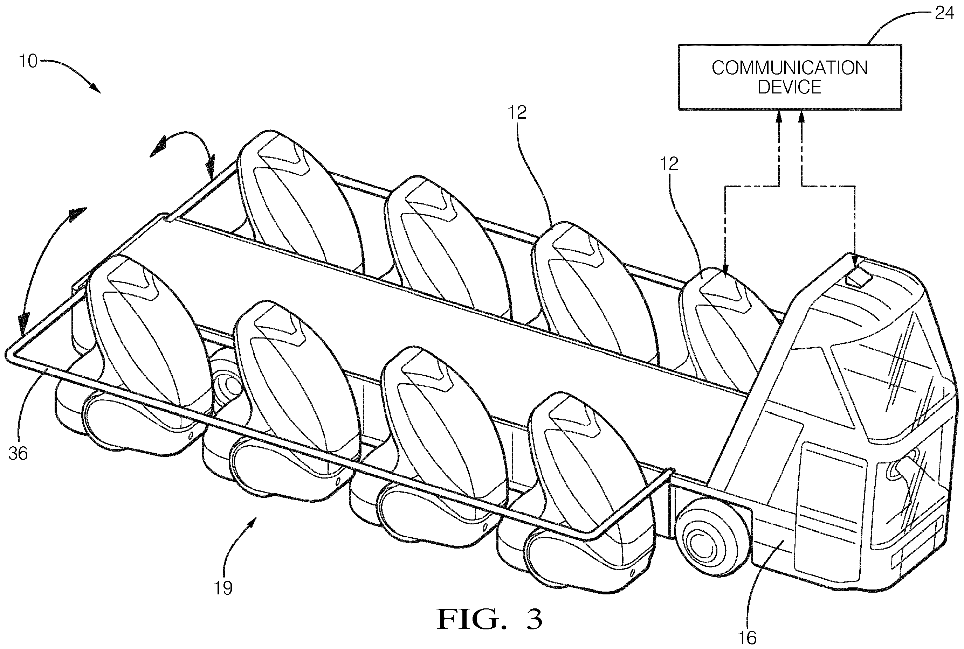

The system 10 includes a carrier-vehicle 16 configured to receive and transport the one or more passenger-vehicles 12. The carrier-vehicle 16 may be any carrier-vehicle 16 suitable for transporting the one or more passenger-vehicles 12, such as a Class 5 - 8 truck. The carrier-vehicle 16 may tow, haul, or carry the one or more passenger-vehicles 12 depending on a size and configuration of the carrier-vehicle 16. For example, the carrier-vehicle 16 may be configured for serial-towing 18 (see Fig. 2) where each of the one or more passenger-vehicles 12 are attached together in-line and towed behind the carrier-vehicle 16. Alternatively, the carrier-vehicle 16 may be configured for parallel-towing 19 (see Fig. 3) where each of the one or more passenger-vehicles 12 are attached to a first-side and to a second-side of a trailer or bed of the carrier-vehicle 16 and towed side-by-side. In another embodiment not shown, the carrier-vehicle 16 may carry the one or more passenger-vehicles 12 on a trailer or bed in any arrangement suitable for transport. It will be appreciated that for the one or more passenger-vehicles 12 that are characterized as electric-vehicles and/or hybrid-electric-vehicles, a battery of the one or more passenger-vehicles 12 may be recharged by the rotating wheels of the one or more passenger-vehicles 12 while under tow.

In one embodiment, the carrier-vehicle 16 is autonomously controlled 20, where a human-operator (not specifically shown) of the carrier-vehicle 16 may do little more than designate a destination to operate the carrier-vehicle 16. In another embodiment, the carrier-vehicle 16 is operated in a manual-mode 22 where the degree or level of automation may be little more than providing an audible or visual warning to the human-operator who is generally in control of the steering, accelerator, and brakes of the carrier-vehicle 16. For example, the system 10 may merely assist the human-operator as needed to change lanes and/or avoid interference with and/or a collision with, for example, an object such as an other-vehicle, a pedestrian, or a road sign.

The one or more passenger-vehicles 12 are configured to autonomously dock with the carrier-vehicle 16 for traveling on the roadway 14. That is, the one or more passenger-vehicles 12 are equipped with known sensors, actuators, and control algorithms to control an approach and attachment to the carrier-vehicle 16 with no interaction from the operators of the one or more passenger-vehicles 12 or the operator of the carrier-vehicle 16. The one or more passenger-vehicles 12 may also be autonomously controlled 20, and/or be operated in the manual-mode 22. In one embodiment the one or more passenger-vehicles 12 are characterized as an automated mobility on-demand vehicle 12A (AMOD 12A). It will be appreciated that the sensors, actuators, and control algorithms used for autonomous control 20 may be employed by the one or more passenger-vehicles 12 to autonomously dock with the carrier-vehicle 16, including, but not limited to, vision-sensors, ranging-sensors, adaptive cruise-control, parking-assist, etc.

The system 10 also includes a communication-device 24 operable to communicate with the one or more passenger-vehicles 12. The communication-device 24 may communicate with the one or more passenger-vehicles 12 using any communication protocol including, but not limited to, dedicated short-range communications (DSRC), or other protocols that conform to standards such as IEEE 1609, SAE J2735, SAE J2945, or Cellular Vehicle-to-Everything ("V2X").

The system 10 also includes one or more controller-circuits 26 in communication with the communication-device 24. The one or more controller-circuits 26 operate the communication-device 24 to coordinate docking 28 of the one or more passenger-vehicles 12 with the carrier-vehicle 16. That is, the one or more controller-circuits 26 match the appropriate carrier-vehicle 16 with the one or more passenger-vehicles 12 and designate docking-locations 30 where the one or more passenger-vehicles 12 may dock with the carrier-vehicle 16. In one embodiment the docking-locations 30 are a depot where the carrier-vehicle 16 may be parked and waiting for the one or more passenger-vehicles 12 to arrive and dock (i.e. static-docking 28A). In another embodiment, the docking-locations 30 are along the roadway 14 where the carrier-vehicle 16 is traveling, and the one or more passenger-vehicles 12 approaches and docks with the moving carrier-vehicle 16 (i.e. dynamic-docking 28B). The one or more controller-circuits 26 may determine the docking-locations 30 based on a location of the carrier-vehicle 16 to reduce a distance required for the one or more passenger-vehicles 12 to travel to dock with the carrier-vehicle 16.

The one or more controller-circuits 26 may include a processor (not specifically shown) such as a microprocessor or other control circuitry such as analog and/or digital control circuitry including an application specific integrated circuit (ASIC) for processing data as should be evident to those in the art. The one or more controller-circuits 26 may include a memory (not specifically shown), including non-volatile memory, such as electrically erasable programmable read-only-memory (EEPROM) for storing one or more routines, thresholds, and captured data. The one or more routines may be executed by the processor to perform steps for coordinating the docking-locations 30 based on signals received by the communication-device 24 as described herein. As will be appreciated, the one or more controller-circuits 26 may be separate circuity, be the same circuitry, subsystems of one another, or any combination thereof. As also will be appreciated, the functions performed by the one or more controller-circuits 26 may be handled by each individual controller-circuit 26 or distributed between the one or more controller-circuits 26, e.g., load balancing.

A travel-route of the carrier-vehicle 16 may be controlled by a centralized-database based on requests of the one or more passenger-vehicles 12. That is, the path of the carrier-vehicle 16 may be dictated by the centralized-database based on the docking-locations 30 determined for the one or more passenger-vehicles 12. In one embodiment, the one or more controller-circuits 26 further operate the communication-device 24 to coordinate undocking-locations 32 of the one or more passenger-vehicles 12 from the carrier-vehicle 16, whereby the carrier-vehicle 16 receives and transports the one or more passenger-vehicles 12 to the one or more undocking-locations 32 along the travel-route, as requested by the one or more passenger-vehicles 12. In another embodiment, the one or more passenger-vehicles 12 undock at-will. That is, the one or more passenger-vehicles 12 do not request the undocking-locations 32 in advance and undock on their own accord while the carrier-vehicle 16 is either moving or stopped.

In another embodiment the carrier-vehicle 16 includes a fuel-port 34 operable to re-fuel the one or more passenger-vehicles 12 while the one or more passenger-vehicles 12 are docked with the carrier-vehicle 16. The fuel-port 34 may comprise an electrical-connector (not shown) that may be connected to the one or more passenger-vehicles 12 to recharge the battery of the one or more passenger-vehicles 12, or may comprise a hose with which to transport a fluid-fuel (e.g. gasoline, diesel, hydrogen) to refill a fuel-tank of the one or more passenger-vehicles 12. The fuel-port 34 may be integrated into a towing-apparatus or may be a separate component.

In another embodiment, the carrier-vehicle 16 includes a barrier 36 to protect the one or more passenger-vehicles 12 from collisions with other-vehicles (not shown) while traveling on the roadway 14. The barrier 36 is beneficial when transporting the one or more passenger-vehicles 12 that may not have a rated crash protection necessary for traveling at highway speeds, such as the AMOD 12A, and may enable occupants to remain in the one or more passenger-vehicles 12 during transport. The barrier 36 may include walls or railings that separate the one or more passenger-vehicles 12 from other-vehicles on the roadway 14 and may be deployed after docking 28.

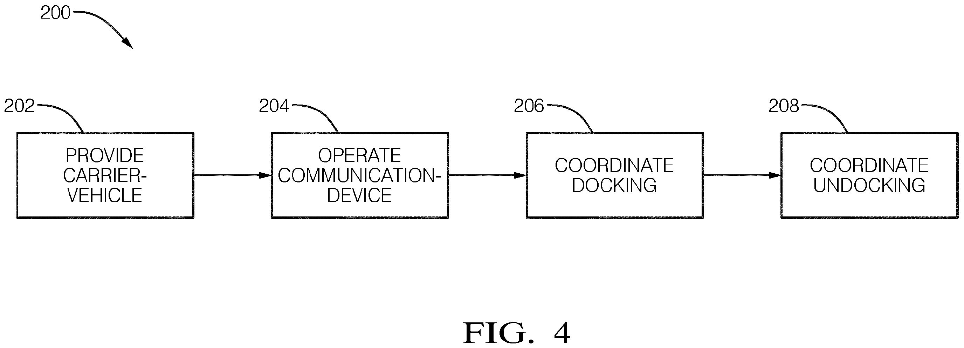

Fig. 4 is a flow chart illustrating another embodiment of a method 200 of operating the roadway transport system 10 of Fig. 1, hereafter referred to as the system 10.

Step 202, PROVIDE CARRIER-VEHICLE, may include providing a carrier-vehicle 16 for traveling on a roadway 14. The carrier-vehicle 16 is operable to receive one or more passenger-vehicles 12 configured to autonomously dock with the carrier-vehicle 16 as described above. The carrier-vehicle 16 may tow, haul, or carry the one or more passenger-vehicles 12. For example, the carrier-vehicle 16 may be configured for serial-towing 18 (see Fig. 2), or may be configured for parallel-towing 19 (see Fig. 3). In another embodiment, the carrier-vehicle 16 may carry the one or more passenger-vehicles 12 on the trailer or bed in any arrangement suitable for transport. In another embodiment the carrier-vehicle 16 includes a fuel-port 34 and re-fuels the one or more passenger-vehicles 12. In another embodiment the carrier-vehicle 16 includes a barrier 36 to protect the one or more passenger-vehicles 12 from collisions with other-vehicles while traveling on the roadway 14.

Step 204, OPERATE COMMUNICATION-DEVICE, may include communicating with the one or more passenger-vehicles 12 using a communication-device 24. The communication-device 24 may communicate with the one or more passenger-vehicles 12 using any communication protocol including, but not limited to, dedicated short-range communications (DSRC), or other protocols that conform to standards such as IEEE 1609, SAE J2735, SAE J2945, or Cellular Vehicle-to-Everything ("V2X").

Step 206, COORDINATE DOCKING, may include coordinating docking 28 of the one or more passenger-vehicles 12 with the carrier-vehicle 16, with one or more controller-circuits 26 in communication with the communication-device 24. That is, the one or more controller-circuits 26 match the appropriate carrier-vehicle 16 with the one or more passenger-vehicles 12 and designate docking-locations 30 as described above. The docking-locations 30 may be a depot, or may be along the roadway 14 where the carrier-vehicle 16 is traveling, as described above.

Step 208, COORDINATE UNDOCKING, may include coordinating undocking-locations 32 of the one or more passenger-vehicles 12 from the carrier-vehicle 16, with the one or more controller-circuits 26. The carrier-vehicle 16 receives and transports the one or more passenger-vehicles 12 to one or more undocking-locations 32 along the travel-route as requested by the one or more passenger-vehicles 12. Alternatively, the one or more passenger-vehicles 12 may undock at-will as described above.

Accordingly, a roadway transport system 10 (the system 10), and a method 200 of operating the system 10, are provided. The system 10 is an improvement over other roadway-transport-systems because the system 10 coordinates docking of the one or more passenger-vehicles 12 with the carrier-vehicle 16, which both may be autonomously controlled 20.

While this invention has been described in terms of the preferred embodiments thereof, it is not intended to be so limited, but rather only to the extent set forth in the claims that follow. "One or more" includes a function being performed by one element, a function being performed by more than one element, e.g., in a distributed fashion, several functions being performed by one element, several functions being performed by several elements, or any combination of the above. It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact. The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

## Claims

1. A roadway transport system (10), the system (10) comprising:
a carrier-vehicle (16), the carrier-vehicle (16) receiving one or more passenger-vehicles (12) configured to autonomously dock with the carrier-vehicle (16) for traveling on a roadway (14);
a communication-device (24) operable to communicate with the one or more passenger-vehicles (12); and
one or more controller-circuits (26) in communication with the communication-device (24);
the one or more controller-circuits (26) operating the communication-device (24) to coordinate docking of the one or more passenger-vehicles (12) with the carrier-vehicle (16).

2. The system (10) in accordance with claim 1, wherein the one or more controller-circuits (26) determine a docking-location based on a location of the carrier-vehicle (16).

3. The system (10) in accordance with any one of the preceding claims, wherein the carrier-vehicle (16) is autonomously controlled.

4. The system (10) in accordance with any one of the preceding claims, wherein the one or more passenger-vehicles (12) are autonomously controlled.

5. The system (10) in accordance with any one of the preceding claims, wherein the one or more controller-circuits (26) further operate the communication-device (24) to coordinate undocking-locations (32) of the one or more passenger-vehicles (12) from the carrier-vehicle (16).

6. The system (10) in accordance with any one of the preceding claims, wherein the one or more passenger-vehicles (12) undocks at-will.

7. The system (10) in accordance with any one of the preceding claims, wherein the one or more passenger-vehicles (12) may be an automated mobility on-demand vehicle (12A).

8. The system (10) in accordance with any one of the preceding claims, wherein the carrier-vehicle (16) includes a fuel-port (34) operable to re-fuel the one or more passenger-vehicles (12) while the one or more passenger-vehicles (12) are docked with the carrier-vehicle (16).

9. The system (10) in accordance with any one of the preceding claims, wherein the carrier-vehicle (16) receives and transports the one or more passenger-vehicles (12) to one or more undocking-locations (32) along a travel-route.

10. The system (10) in accordance with any one of the preceding claims, wherein the carrier-vehicle (16) includes a barrier (36) configured to protect the one or more passenger-vehicles (12) from collisions with other-vehicles while traveling on the roadway (14).

11. A method (200) of operating a roadway transport system (10), the method (200) comprising:
providing (202) a carrier-vehicle (16) for traveling on a roadway (14), the carrier-vehicle (16) operable to receive one or more passenger-vehicles (12) configured to autonomously dock with the carrier-vehicle (16);
operating (204) a communication-device (24), with one or more controller-circuits (26) in communication with the communication-device (24), to communicate with the one or more passenger-vehicles (12); and
coordinating (206), with the one or more controller-circuits (26), docking of the one or more passenger-vehicles (12) with the carrier-vehicle (16).

12. The method (200) in accordance with claim 11, further including the step of determining, with the one or more controller-circuits (26), docking-locations (30) based on a location of the carrier-vehicle (16).

13. The method (200) in accordance with any one of claims 11 to 12, further including the step of coordinating (208), with the one or more controller-circuits (26), undocking-locations (32) of the one or more passenger-vehicles (12) from the carrier-vehicle (16).

14. The method (200) in accordance with any one of claims 11 to 13, wherein the carrier-vehicle (16) includes a fuel-port (34) operable to re-fuel the one or more passenger-vehicles (12), further including the step of refueling the one or more passenger-vehicles (12) while the one or more passenger-vehicles (12) are docked with the carrier-vehicle (16).

15. The method (200) in accordance with any one of claims 11 to 14, further including the step of transporting, with the carrier-vehicle (16), the one or more passenger-vehicles (12) to one or more undocking-locations (32) along a travel-route.
